Europäisches Patentamt

European Patent Office

Office européen des brevets

(11) Publication number: **0 071 194**
**B1**

(12) **EUROPEAN PATENT SPECIFICATION**

(45) Date of publication of patent specification: **26.03.86**

(21) Application number: **82106624.8**

(22) Date of filing: **22.07.82**

(51) Int. Cl.⁴: **F 02 B 67/06,** F 16 H 55/36, F 16 D 3/74

(54) Crankshaft pulley assembly of internal combustion engine.

(30) Priority: **28.07.81 JP 111874/81 u**

(43) Date of publication of application:
**09.02.83 Bulletin 83/06**

(45) Publication of the grant of the patent:
**26.03.86 Bulletin 86/13**

(84) Designated Contracting States:
**DE FR GB**

(56) References cited:
**FR-A-2 319 804
GB-A-2 016 649
US-A-2 253 591
US-A-4 265 135**

(73) Proprietor: **NISSAN MOTOR CO., LTD.
No.2, Takara-cho, Kanagawa-ku
Yokohama-shi Kanagawa-ken 221 (JP)**

(72) Inventor: **Kikuchi, Kazuhiro
c/o Oppama Plant Nissan Motor Co. Ltd.
No. 1, Natsushima-cho Yokosuka City (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a crankshaft pulley assembly of the type as indicated in the precharacterising clause of claim 1. A crankshaft pulley assembly of this type is shown in FR—A—2319804.

According to said prior art an inner (first) pulley comprises an outer annulus which is secured to a so-called crown. This crown in turn is fixed via a resilient member to a driving member which is keyed to the crankshaft. An outer (second) pulley is located in front of the end section of said crankshaft and is secured to the driven member which in turn is fixed to the crankshaft.

Said conventional crankshaft pulley assembly tends to unavoidably give rise to membrane vibration as in a loud-speaker cone due to engine vibration transmitted through the crankshaft. This membrane vibration creates considerable noise, thereby contributing to total engine noise generation. Such noise creating tendency is remarkable in the case of the crankshaft pulley being formed of pressworked sheet metal.

The present invention intends to provide a remedy of the drawbacks and, in particular, to improve the total engine noise reduction.

The claimed invention is defined in claim 1.

As outlined in claim 1, a resilient member made of an elastomeric material is interposed under pressure between an annular flat section of said first pulley and an annular flat joining section of the second pulley, said resilient member being substantially coextensive with the second pulley annular flat joining section. Therefore, the vibration of the inner and outer pulleys can be effectively dissipated as thermal energy between each pulley and the resilient member, thereby greatly suppressing noise emission from the crankshaft pulley assembly. This achieves total engine noise reduction, since the noise from the crankshaft pulley has been one of major noise sources.

Merely one way of carrying out the invention is described in detail below with reference to drawings which illustrate a specific embodiment, in which:

Fig. 1 is a cross-sectional view of a preferred embodiment of a crankshaft pulley assembly of an internal combustion engine, in accordance with the present invention;

Fig. 2 is an enlarged fragmentary view of an essential part of the crankshaft pulley assembly of Fig 1; and

Fig. 3 is a sectional illustration of a part of the crankshaft pulley assembly of Fig. 1, showing the operation thereof.

Detailed Description of the Invention

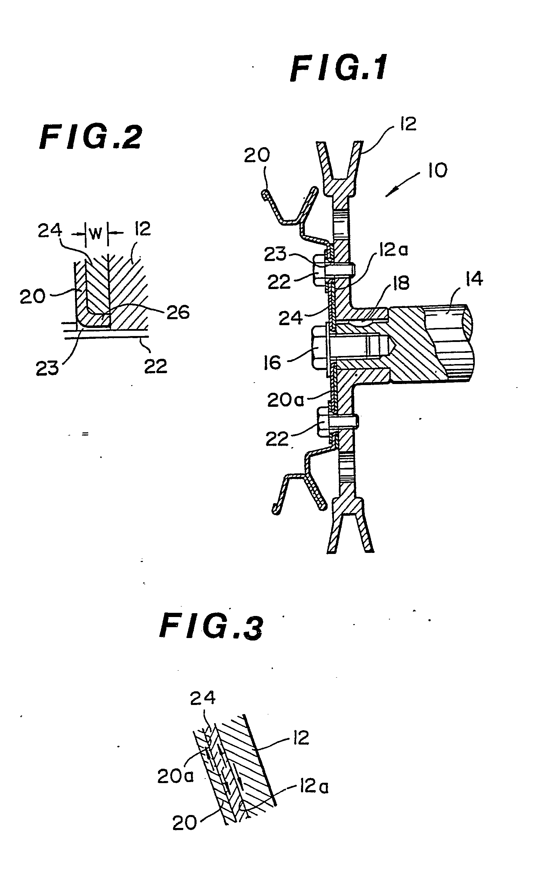

Referring now to Figs. 1 and 2 of the drawings, there is shown a preferred embodiment of a crankshaft pulley assembly 10 in accordance with the present invention. The crankshaft pulley assembly 10 comprises an inner or first pulley 12 which is mounted on an end section of a crankshaft 14 and secured in position by means of a bolt 16 after its location is completed by a key 18. The inner pulley 12 is formed along its outer periphery with a groove (no numeral) for receiving a V-belt (not shown) which operates essential engine accessories such as an alternator and a water pump of an engine cooling system.

An outer or second pulley 20 is disposed on the front side surface of the inner pulley 12, and fastened in position by a plurality of relatively small bolts 22 which are located in bolt-holes 23 and further by the above-mentioned bolt 16 so that the inner and outer pulleys 12, 20 are secured onto the crankshaft 14 as a single unit. The outer pulley 20 is formed along its outer periphery with a groove (no numeral) for receiving a V-belt (not shown) which operates optional engine accessories such as a compressor of an air conditioning system and a power steering pump though not shown. In this embodiment, the outer pulley 12 is formed of cast iron which is relatively high·in rigidity, while the inner pulley 20 is formed of pressworked steel plate or sheet for the purpose of engine weight reduction.

A resilient member 24 is interposed between the joining sections 12a, 20a of the inner and outer pulleys 12, 20, and made of a resilient material having damping capacity, such as rubber. The resilient member 24 is formed annular and has an outer diameter generally same as in the joining section 20a of the outer pulley 20. Additionally, the resilient member 24 has a predetermined thickness so as to be strongly pressed between the joining sections 12a, 20a of the inner and outer pulleys 12, 20 upon joining of the inner and outer pulleys 12, 20 by the bolts 16, 22.

As best shown in Fig. 2, each bolt-hole 23 is defined by a cylindrical projection or spacer portion 26 which protrudes toward the inner pulley 12, which projection 26 functions as a spacer for maintaining a predetermined space between the inner and outer pulleys 12, 20. By virtue of this cylindrical projection 26, the degree of screwing-in the bolts 22 is kept generally constant. In this connection, the thickness of the resilient member 24 is larger than the width W of the spacer portion 26.

The operation of the thus arranged crankshaft pulley assembly 10 will be discussed hereinafter with reference to Fig. 3.

During operation of the engine, when vibration is applied from the crankshaft 14 to the inner and outer pulleys 12, 20, the membrane vibration of the pulleys 12, 20 is induced like a cone of a loudspeaker. At this time, relative movement is made between the inner pulley 12 and the resilient member 24 as indicated by arrows in Fig. 3. This relative movement is accompanied by a relatively large friction and therefore the vibration energy of the inner pulley 12 is converted to thermal energy and dissipated between the inner pulley 12 and the resilient member 24, thereby effectively damping the membrane vibration of the inner pulley 12.

In addition, membrane vibration also rises in the outer pulley 20 secured to the inner pulley 12.

However, the membrane vibration of the inner pulley is effectively suppressed as discussed above, and additionally vibration damping action is made also between the outer pulley 20 and the resilient member 24 in the same manner as between the inner pulley 12 and the resilient member 24, thus damping the vibration of the outer pulley 20. It is to be noted that the frequency of noise emitted from the crankshaft pulleys lies within a range of 1—2 KHz to which human's hearing sense is highly sensitive. Accordingly, such crankshaft pulley noise reduction provides a noticeable advantage from a point of view of hearing sense. It will be understood that the pressworked metal plate pulley tends to readily create vibration noise as compared with the cast iron pulley, and therefore the above-discussed noise reduction effect is particularly remarkable in case where the outer pulley 20 is formed of pressworked metal plate.

While the inner and outer pulleys have been shown and described as being formed of cast iron and pressworked metal plate, respectively, it will be understood that the present invention is applicable also to case where the both pulleys are formed of pressworked metal plate or cast iron, or of the combination of these two materials.

As is appreciated from the above, according to the present invention, the resilient member is interposed between the joining sections of the inner and outer pulleys which are joined as a single unit by means of bolts, thereby constituting the crankshaft pulley assembly. As a result, the membrane vibration of the crankshaft pulley assembly can be suppressed to a considerable extent, thereby reducing noise emission from the crankshaft pulley assembly.

## Claims

1. A crankshaft pulley assembly (10) of an internal combustion engine, comprising:

a first pulley (12) securely mounted on an end section of a crankshaft of the engine;

a second pulley (20) connected to said first pulley (12);

and a resilient member (24) interposed between the two pulleys, wherein said first pulley (12) has an annular flat section (12a) located around said crankshaft end section and being arranged perpendicular to the longitudinal axis of said crankshaft;

and wherein said second pulley (20) has an annular flat joining section (20a) located around said crankshaft end section and parallel with said first pulley annular flat section (12a), characterised in that said first pulley annular flat section (12a) is directly secured to the annular flat joining section (20a) of said second pulley (20);

and in that said resilient member (24) made of an elastomeric material is interposed under pressure between said first pulley annular flat section (12a) and the joining section of said second pulley annular flat joining section (20a), said resilient member (24) being substantially coextensive with said second pulley annular flat joining section (20a).

2. A crankshaft pulley assembly as claimed in Claim 1, further comprising means defining a plurality of bolt-holes (23) at the joining section (20a) of said second pulley (20), and a plurality of bolts (22) for joining said first and second pulleys (12, 20) as a single unit, each bolt passing through each bolt-hole (23) and secured to said first pulley (12).
(Figs. 1—3)

3. A crankshaft pulley assembly as claimed in Claim 2, wherein said bolt-holes defining means includes plurality of cylindrical projections (26) each of which defines thereinside said bolt-hole (23), each cylindrical projection (26) protruding toward and contacting with the surface of said first pulley (12) to form a space between the surface of said first pulley and the joining section of said second pulley, said resilient member (24) being disposed within said space.
(Figs. 1—3)

4. A crankshaft pulley assembly as claimed in Claim 3, wherein said second pulley (20) is formed of pressworked sheet metal.
(Figs. 1—3)

5. A crankshaft pulley assembly as claimed in Claim 4, wherein said first pulley (12) is made of cast iron.
(Figs. 1—3)     .

6. A crankshaft pulley assembly as claimed in Claim 1, wherein said second pulley (20) is located opposite to the engine with respect to said first pulley (12).
(Figs. 1—3)

7. A crankshaft pulley assembly as claimed in Claim 1, wherein said resilient member (24) is made of a material having damping capacity.
(Figs. 1—3)

8. A crankshaft pulley assembly as claimed in Claim 7, wherein said material of said resilient member (24) is rubber.
(Figs. 1—3)

9. A crankshaft pulley assembly as claimed in Claim 3, wherein the thickness of said resilient member (24) is larger than the distance (W) of said space between said first and second pulleys (12, 20), before being disposed between said first and second pulleys.
(Figs. 1—3)

## Revendications

1. Assemblage poulie-vilebrequin (10) d'un moteur à combustion interne, comprenant:

une première poulie (12) montée solidement sur une section extrême d'un vilebrequin du moteur;

une seconde poulie (20) reliée à ladite première poulie (12);

et un organe élastique (24) interposé entre les deux poulies, où ladite première poulie (12) a une section plate annulaire (12a) placée autour de ladite section extrême du vilebrequin et qui est agencée perpendiculairement à l'axe longitudinal dudit vilebrequin;

et où ladite seconde poulie (20) a une section annulaire plate de jonction (20a) placée autour de ladite section extrême du vilebrequin et parallèle à ladite section annulaire plate (12a) de ladite première poulie, caractérisé en ce que ladite section annulaire plate (12a) de ladite première poulie est directement fixée à la section annulaire plate (20a) de jonction de ladite seconde poulie (20);

et en ce que ledit organe élastique (24) fait en un matériau élastomère est interposé sous pression entre ladite section annulaire plate (12a) de la première poulie et la section de jonction de ladite section annulaire plate de jonction (20a) de ladite seconde poulie, ledit organe élastique (24) étant sensiblement coextensif avec ladite section annulaire plate de jonction (20a) de la seconde poulie.

2. Assemblage poulie-vilebrequin selon la revendication 1 comprenant de plus un moyen définissant un certain nombre de trous de boulon (23) à la section de jonction (20a) de ladite seconde poulie (20) et un certain nombre de boulons (22) pour joindre lesdites première et seconde poulies (12, 20) en une seule unité, chaque boulon traversant chaque trou de boulon (23) et étant fixé à ladite première poulie (12).

(Figures 1—3).

3. Assemblage poulie-vilebrequin selon la revendication 2, où ledit moyen définissant des trous de boulon comprend un certain nombre de protubérances cylindriques (26), dont chacune définit ledit trou de boulon (23), chaque protubérance cylindrique (26) faisant saillie vers et étant en contract avec la surface de ladite première poulie (12) former un espace entre la surface de ladite première poulie et la section de jonction de ladite seconde poulie, ledit organe élastique (24) étant disposé dans ledit espace.

(Figures 1—3).

4. Assemblage poulie-vilebrequin selon la revendication 3, où ladite seconde poulie (20) est formée d'un métal en tôle emboutie.

(Figures 1—3).

5. Assemblage poulie-vilebrequin selon la revendication 4, où ladite première poulie (12) est en fonte.

(Figures 1—3).

6. Assemblage poulie-vilebrequin selon la revendication 1, où ladite seconde poulie (20) est placée opposée au moteur relativement à ladite première poulie (12).

(Figures 1—3).

7. Assemblage poulie-vilebrequin selon la revendication 1, où ledit organe élastique (24) est fait en un matériau ayant une capacité d'amortissement.

(Figures 1—3).

8. Assemblage poulie-vilebrequin selon la revendication 7, où ledit matériau dudit organe élastique (24) est du caoutchouc.

(Figures 1—3).

9. Assemblage poulie-vilebrequin selon la revendication 3, où l'épaisseur dudit organe élastique (24) est plus importante que la distance (W) dudit espace entre lesdites première et seconde poulies (12, 20) avant d'être disposé entre lesdites première et seconde poulies.

(Figures 1—3).

**Patentansprüche**

1. Kurbelwellen-Riemenscheiben-Anordnung (10) einer Brennkraftmaschine mit:

Einer ersten Riemenscheibe (12), welche fest an einem Endbereich einer Kurbelwelle der Maschine gelagert ist;

einer zweiten Riemenscheibe (20), welche mit der ersten Riemenscheibe (12) verbunden ist;

und einem elastischen Bauteil (24), welches zwischen den zwei Riemenscheiben zwischengeschaltet ist, wobei die erste Riemenscheibe (12) einen ringförmigen flachen Bereich (12a) aufweist, welcher um den Endbereich der Kurbelwelle und rechtwinklig zu der Längsachse der Kurbelwelle angeordnet ist;

und wobei die zweite Riemenscheibe (20) einen flachen ringförmigen Verbindungsteil (20a) aufweist, welcher um den Endbereich der Kurbelwelle und parallel zu dem ringförmigen flachen Bereich (12a) der ersten Riemenscheibe angeordnet ist, dadurch gekennzeichnet, daß der flache ringförmige Bereich (12a) der ersten Riemenscheibe direkt mit dem ringförmigen flachen Verbindungsteil (20a) der zweiten Riemenscheibe (20) verbunden ist;

und daß das elastische Bauteil (24) aus einem elastomerischen Material besteht und unter Druck zwischen dem ringförmigen flachen Bereich (12a) der ersten Riemenscheibe und dem Verbindungsteil des ringförmigen flachen Verbindungsteils (20a) der zweiten Riemenscheibe zwischengeordnet ist, wobei das elastische Bauteil (24) sich im wesentlichen ebenso weit erstreckt wie der flache ringförmige Verbindungsteil (20a) der zweiten Riemenscheibe.

2. Anordnung nach Anspruch 1 mit einer Einrichtung zur Bildung mehrerer Schraubenlöcher (23) an dem Verbindungsteil (20a) der zweiten Riemenscheibe (20) und mit mehreren Schrauben (22) zur Verbindung der ersten und der zweiten Riemenscheibe (12, 20) zu einer Einheit, wobei jede Schraube durch jedes Schraubenloch (23) hindurchragt und an der ersten Riemenscheibe (12) befestigt ist. (Fig. 1—3)

3. Anordnung nach Anspruch 2, wobei die Schraubenlöcher eine Einrichtung bilden, welche mehrere zylindrische Vorsprünge (26) umfaßt, welche in ihrem inneren die Schraubenlöcher (23) bilden, wobei jeder der zylindrischen Vorsprünge (26) sich in Richtung auf die Oberfläche der ersten Riemenscheibe (12) erstreckt und mit dieser in Kontakt steht, um einen Zwischenraum zwischen der Oberfläche der ersten Riemenscheibe und dem Verbindungsteil der zweiten Riemenscheibe zu bilden, wobei das elastische Bauteil (24) in diesem Zwischenraum angeordnet ist. (Fig. 1—3)

4. Anordnung nach Anspruch 3, wobei die zweite Riemenscheibe (20) aus einem verformten Metallblech gebildet ist. (Fig. 1—3)

5. Anordnung nach Anspruch 4, wobei die erste Riemenscheibe (12) aus Gußeisen gefertigt ist. (Fig. 1—3)

6. Anordnung nach Anspruch 1, wobei die zweite Riemenscheibe (20) im Hinblick auf die erste Riemenscheibe (12) der Maschine gegenüberliegend angeordnet ist. (Fig. 1—3)

7. Anordnung nach Anspruch 1, wobei das elastische Bauteil (24) aus einem Material gefertigt ist, welches eine Dämpfungseigenschaft aufweist. (Fig. 1—3)

8. Anordnung nach Anspruch 7, wobei das Material des elastischen Bauteils (24) Gummi ist. (Fig. 1—3)

9. Anordnung nach Anspruch 3, wobei die Dicke des elastischen Bauteils (24) vor dessen Anordnung zwischen der ersten und der zweiten Riemenscheibe größer ist, als die Breite (W) (des Abstands zwischen der ersten und der zweiten Riemenscheibe (12, 20). (Fig. 1—3)

# FIG.1

# FIG.2

# FIG.3